# FASCICULE DE BREVET EUROPEEN

(11) **EP 2 724 417 B1**
(45) Date de publication et mention de la délivrance du brevet: **12.08.2015**
(21) Numéro de dépôt: 12734989.2
(22) Date de dépôt: 26.06.2012
(51) Int. Cl.: H01Q 1/42, B64C 1/36, H01Q 1/28

(54) **PROCÉDÉ D'OUVERTURE D'UN DÔME DE PROTECTION, EN PARTICULIER D'UN RÂDOME, ET RÂDOME ÉQUIPÉ D'UN PANTOGRAPHE DE MISE EN OEUVRE**
VERFAHREN ZUM ÖFFNEN EINER SCHUTZGLOCKE, INSBESONDERE EINES RADOMS, UND RADOM MIT SCHERENSTROMABNEHMER ZUR UMSETZUNG DES VERFAHRENS
METHOD OF OPENING A PROTECTIVE DOME, IN PARTICULAR A RADOME, AND RADOME EQUIPPED WITH A PANTOGRAPH FOR IMPLEMENTATION THEREOF

(30) Priorité: 27.06.2011 FR 1155687
(43) Date de publication de la demande: 30.04.2014
(73) Titulaire: Airbus Operations S.A.S., 31060 Toulouse (FR)
(72) Inventeur: FOURNIE, Jacques, F-31330 Grenade (FR); BERNUS, Christophe, F-31000 Toulouse (FR); DUPAS, Thony, F-31000 Toulouse (FR); PHALIPPOU, Jérôme, 31170 Tournefeuille (FR); MERCADIER, Gilles, 81370 Saint Sulpice sur Tarn (FR); TOUREILLE, Nicolas, 31300 Toulouse (FR); MILIN, Frédéric, 31770 Colomiers (FR); REDON, Jean, 31500 Toulouse (FR)
(74) Mandataire: Gevers France
(86) Numéro de dépôt international: PCT/FR2012/051455
(87) Numéro de publication internationale: WO 2013/001224

(56) Documents cités:
- EP-A1- 1 612 139
- DE-A1- 1 481 684
- US-A- 2 943 756
- US-A- 3 653 615
- US-B1- 6 796 529

## Description

### DOMAINE TECHNIQUE

L'invention concerne un procédé d'ouverture d'un dôme de protection d'un dispositif à protéger, en particulier d'une structure de réception et/ou d'émission d'ondes, par exemple d'un radar ou d'une antenne de télécommunication, en particulier d'un radôme d'aéronef, ainsi qu'un radôme équipé d'un pantographe apte à mettre en oeuvre ce procédé.

Les systèmes d'ouverture de dôme de protection de structures, tels que des radomes d'aéronef, sont en général conçus pour pouvoir satisfaire à différentes exigences liées à l'utilisation, à la maintenance, à la fabrication et à l'assemblage, en prenant en compte notamment les problèmes de poids et de corrosion.

Les systèmes d'ouverture comportent une partie fixe et une partie mobile constituée d'éléments mécaniques mobiles qui définissent des cinématiques d'ouverture rectilignes, circulaires latérales ou pivotantes.

### ETAT DE LA TECHNIQUE

Il est connu, par exemple dans le domaine aéronautique, que de tels systèmes peuvent comporter des organes d'extension choisis parmi des bras rectilignes ou en col de cygne, des charnières, des fixations amovibles et/ou des bras et tiges latérales.

DE 1481684 est consideré l'état de la technique le plus proche.

Ainsi, le bras rectilignes sur le pourtour du dôme permettent d'atteindre l'axe de rotation lors de l'ouverture du dôme. Les réglages peuvent alors être réalisés durant l'assemblage. De plus, de tels bras rectilignes constituent une solution qui ne génère pas de surplus important en masse.

L'utilisation de bras en cols de cygne dans le même but, à l'intérieur du pourtour du dôme, demande plus de poids car cette solution nécessite des moyens supplémentaires sur l'axe de rotation, lequel doit se retrouver derrière la partie mobile. Du fait de la présence de cette partie supplémentaire, l'interface entre la structure à protéger et le mécanisme d'ouverture est complexe et coûteuse. L'étanchéité au niveau de cette interface est également complexe et l'ensemble est alourdi.

Dans une configuration à ouverture latérale, les bras sont montés sur une charnière commune et le mouvement de chaque bras est guidé par une tige de liaison. Cette configuration génère les mêmes inconvénients que la solution ci-dessus. De plus, une ouverture latérale n'est pas optimale pour la maintenance qui nécessite alors un double accès pour deux opérateurs, ce qui peut entrainer des interactions avec la plateforme de la maintenance.

L'ouverture par des charnières externes est une solution plus légère que la précédente mais, comme la solution à bras rectilignes, elle nécessite plus de réglages et augmente la traînée aérodynamique.

Les systèmes d'ouverture ci-dessus ne peuvent être mis en oeuvre qu'avec des parties mobiles rigides. Ainsi, les radômes composites d'aéronefs doivent être rigidifiés, par exemple par une monture métallique. Ceci entraine des coûts supplémentaires, un poids et une complexité de l'assemblage mobile. De plus, une monture de rigidification nécessite une interface rigide avec un châssis de montage de la structure fixe. Il s'ensuit une augmentation des jeux et la présence de pas aérodynamiques entre le radôme et la partie fixe.

Un système d'ouverture par des attaches de fixation amovibles permet d'alléger la structure car aucun mécanisme d'ouverture supplémentaire n'est mis en oeuvre. De plus la partie mobile n'a pas besoin d'être dimensionnée pour accueillir des logements des mécanismes de structure lorsqu'elle est ouverte.

Les avantages de cette solution résident dans le fait que la partie mobile se positionne plus facilement pendant l'assemblage et répond aux exigences aérodynamiques. Ainsi la partie mobile est maintenue par un outillage spécifique lorsqu'elle est ouverte pendant les opérations de maintenance.

Les inconvénients viennent du temps dédié au retrait des fixations en général au-dessus des objectifs de maintenance, et la nécessité d'un équipement de service de base qui n'est pas toujours disponible.

### EXPOSÉ DE L'INVENTION

L'invention vise à réaliser une ouverture de dôme de protection sans les inconvénients ci-dessus exposés, en particulier une ouverture simple, rapide, permettant une accessibilité à un dispositif (en particulier un dispositif de communication de type radar et/ou autres systèmes de communication) sans risque de corrosion ni de dommage - avec une résistance au regard des charges extrêmes et du vent -, un assemblage et un réglage rapides avec des outils simples, un faible poids, des coûts économiques ainsi qu'une traînée aérodynamique réduite.

Pour ce faire, l'invention prévoit une cinématique unique combinant deux mouvements de manière à éloigner le dôme tout en ouvrant rapidement un espace d'intervention.

Plus précisément, la présente invention a pour objet un procédé d'ouverture d'un dôme de protection d'un dispositif à protéger, en particulier d'une structure de télécommunication par émission/réception d'ondes, monté dans une partie dite fixe. Une interface (de préférence plane pour des raisons d'étanchéité) sépare, en position initiale avant ouverture, le dôme de la partie fixe. Dans ce procédé, le dôme est relié à la partie fixe par au moins deux couplages indépendants à double liaison mobiles en rotation entre le dôme et la partie fixe. Les liaisons d'un même couplage sont montées en commun pour former globalement un pantographe en forme de trapèze isocèle qui, en cours d'ouverture, se déploie par pivotement jusqu'à l'ouverture finale. Ce déploiement s'effectue de sorte que le dôme s'éloigne de la partie fixe selon une combinaison de mouvements de translation et de rotation.

Une inclinaison en trapèze des liaisons permet de rendre le système plus raide par un bon maintien en stabilité latérale en cours et en fin d'ouverture.

Avantageusement, les liaisons de chaque couplage sont montées sur le dôme en articulation périphérique, en particulier en bordure interne du dôme. Cette disposition permet d'augmenter la stabilité.

Par ailleurs, les liaisons de couplage mobiles sont dimensionnées de sorte que la cinématique d'ouverture commence par une phase de déplacement sensiblement en translation du dôme perpendiculairement au plan de l'interface, suivie d'une phase de déplacement sensiblement en translation et rotation du dôme autour d'un axe fixe parallèle à l'axe de pivotement du pantographe. Avantageusement, la cinématique d'ouverture est un déploiement vers le haut en mode utilisation, la position finale du dôme définissant, par rapport à sa position initiale, une ouverture d'angle comprise entre 30 et 80°, de préférence entre 40 et 50°. Un verrouillage automatique, avantageusement en fin d'une extension télescopique, est prévu lorsque le dôme a atteint sa position d'ouverture finale.

En outre, les liaisons sur le dôme présentent avantageusement une élasticité permettant de s'affranchir d'un ajustage.

L'invention se rapporte également à un radôme apte à être reliée à une partie fixe en particulier selon le procédé ci-dessus. Un tel radôme comporte une enveloppe de protection en forme de dôme et des mécanismes de liaison articulés dont des premières extrémités sont aptes à être couplées en rotation sur l'enveloppe de protection. Des deuxièmes extrémités sont aptes à être couplées en rotation sur la partie fixe sur laquelle est monté un système de communication à protéger par le radôme. Les mécanismes de liaison sont formés d'au moins deux couples. Les extrémités de chaque couple de liaison sont montées sur une ferrure commune via des moyens de couplage en rotation. Chaque couple de liaison forme l'un des côtés d'un pantographe en forme de trapèze isocèle. Cette architecture à double liaison, bielle et bras, dont les extrémités sont reprises sur une ferrure commune, permet avantageusement de réduire les masses, les pièces de cinématique et les ferrures étant de structure légère.

Selon des modes de réalisation particuliers :
- chaque couple est constitué de deux éléments de liaison composés d'une bielle rectiligne de guidage et d'un bras de haute résistance mécanique supérieure, chaque élément de chaque couple étant apte à pivoter globalement autour d'un axe fixe ;
- au moins deux tiges télescopiques sont aptes à être fixées en rotation au radôme et à la partie fixe afin de réaliser un verrouillage automatique lorsque le radôme a atteint sa position d'ouverture finale ;
- les moyens de couplage en rotation des extrémités des couples de liaison sur le radôme sont des paliers à rotule sur support en matériau élastique (« shockmount » ou « silent-block » en terminologie anglaise) ;
- les côtés du trapèze isocèle font un angle de 50 à 70°, de préférence 60°, avec les bases ;
- la bielle et le bras d'un couple de liaison présentent, en projection latérale en mode utilisation, un écart angulaire constant, en particulier de 5 à 30°, de préférence de 10 à 25° ;
- les bras de résistance mécanique sont coudés, forment deux bords usinés en nervures et sont liés au support par double cisaillement ;
- avantageusement, les bras de chaque couple de liaison sont dimensionnés en raideur en flexion autour d'un axe vertical passant par l'extrémité sur la partie fixe de façon à limiter la déflexion du dôme sous les charges extrêmes.

### BRÈVE DESCRIPTION DES FIGURES

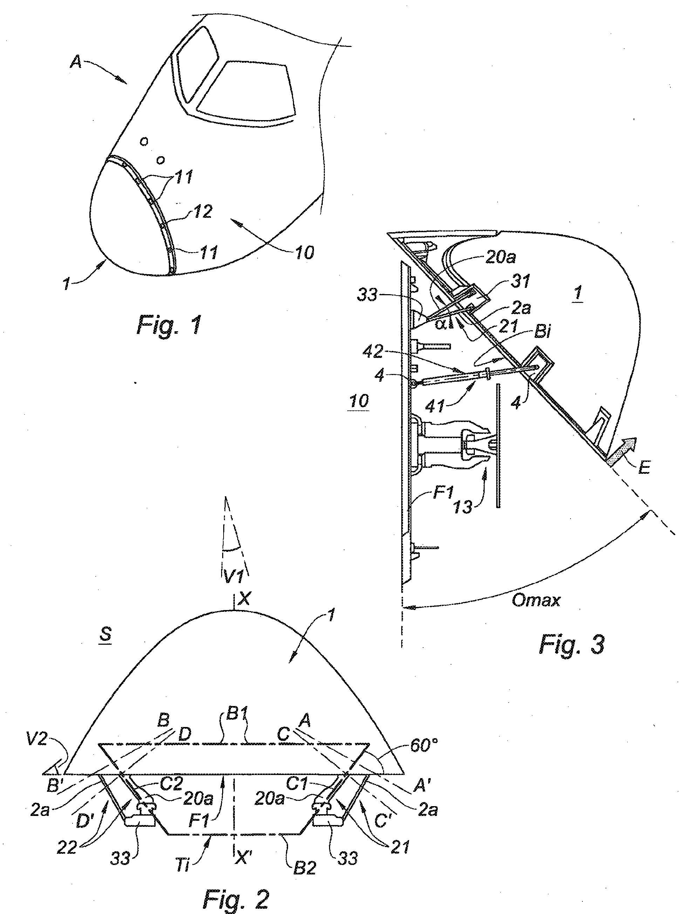

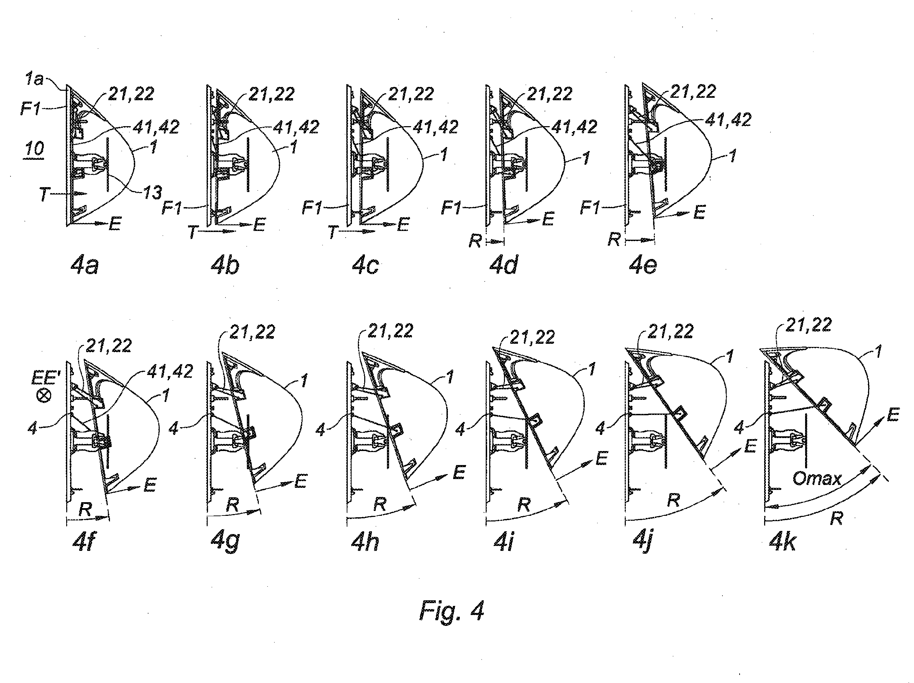

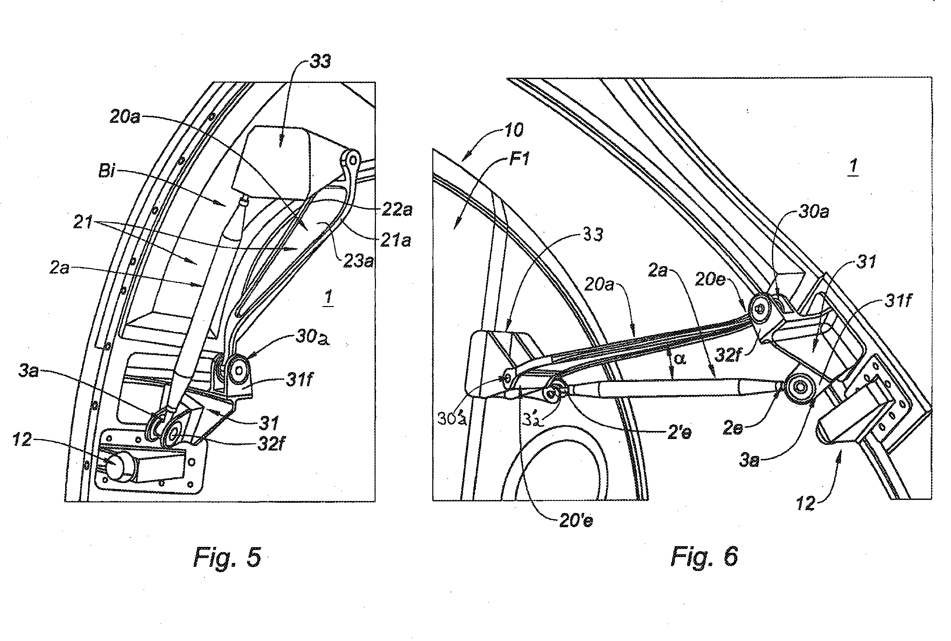

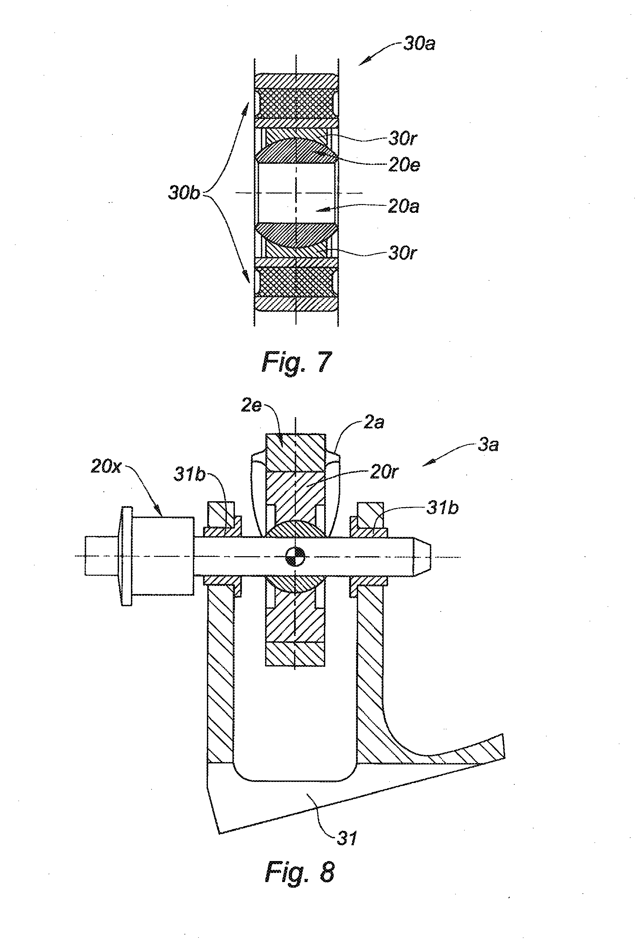

D'autres avantages, aspects et caractéristiques de l'invention apparaîtront à la lecture de la description détaillée qui suit, en référence aux figures jointes qui représentent, respectivement :
- en figure 1, une vue en perspective du nez d'un avion comportant un radôme ;
- en figures 2 et 3, deux vues respectivement supérieure et latérale d'un exemple de radôme selon l'invention en position d'ouverture respectivement intermédiaire et maximale;
- en figure 4 des schémas 4a à 4k en vues latérales de l'ouverture progressive du radôme selon les figures précédentes, entre une position initiale accolée à la partie fixe et une position d'ouverture maximale ;
- en figures 5 et 6, un couple de liaison à bielle et bras coudé en vue frontale de bordure du radôme et en vue perspective entre le radôme et la partie fixe ; et
- en figures 7 et 8, des vues en coupe des moyens de couplage en rotation d'une extrémité de bras et d'une extrémité de bielle sur le support de fixation du radôme.

### DESCRIPTION DÉTAILLÉE

Dans tout le présent texte, la partie sur laquelle repose le radôme, une extrémité de fuselage d'avion dans le cas des exemples qui suivent, est dite fixe car elle sert de référence au mouvement d'ouverture du radôme. L'axe central X'X sur les figures est horizontal, c'est-à-dire parallèle au sol sur lequel est posé l'avion, un plan vertical étant perpendiculaire au sol. Les qualificatifs « supérieur » et « inférieur », ou équivalents, se rapportent à des positions relatives de parties d'un même objet, par exemple du radôme, par rapport au sol.

Sur la figure 1, le nez d'un avion A est constitué d'un radôme 1 formé d'une coupole en matériau composite apte à protéger une antenne radar. Le radôme 1 est en liaison avec le fuselage 10 de l'avion A, ce fuselage constituant la partie dite fixe. Le radôme et le fuselage sont liés par des attaches 11 et des éléments de centrage 12 pour faciliter le montage.

En référence à la vue supérieure de la figure 2, l'exemple de radôme 1 est en position d'ouverture intermédiaire. Ce radôme est en matériau composite. De manière simplifiée, n'apparaissent sur cette figure comme éléments de liaison que les deux couples de liaison 21 et 22, symétriques par rapport au plan central vertical V1 passant par l'axe central X'X. Les couples 21 et 22 sont constitués d'une bielle 2a et d'un bras coudé 20a présentant deux bords usinés formant des nervures encadrant une paroi plane. Ces liaisons sont en alliage métallique, par exemple en alliage d'aluminium. Les bras sont de résistance mécanique supérieure à celle des bielles.

Dans le plan de la figure 2, parallèle au sol S, ces liaisons - en particulier les bras 20a et 20b comme illustré sur la figure - forment les côtés C1 et C2 d'un pantographe trapézoïdal isocèle TI dont les bases B1 et B2 sont représentées en traits pointillés. Dans le plan de la figure, les bielles 2a et les bras 20a d'un même couple 21 ou 22 apparaissent globalement parallèles et forment un angle d'environ 60° par rapport à un plan vertical V2 parallèle à la face d'entrée F1 de la partie fixe (voir figure 3) et aux bases B1, B2. Les couples de liaison 21 et 22 sont montés en commun sur un même support en leurs extrémités (symétriquement par rapport au plan V1): respectivement sur les ferrures 31, en bordure intérieure Bi de l'enveloppe formant le radôme 1 (voir figure 3), et sur les ferrures 33 pour la face d'entrée de la partie fixe. Ces montages en commun sur une même ferrure permettent avantageusement une reprise commune des efforts transmis.

Sur la vue latérale de la figure 3, la face d'entrée F1 de la partie fixe 10 est représentée verticalement. Approximativement au centre de cette face F1 est montée une antenne radar 13. Sur cette figure, apparaissent un couple de liaison 21 et une tige télescopique 41 fixée, en extrémités, en bordure intérieur Bi du radôme 1 et sur la face F1 par des charnières de couplage en rotation appropriées 4 et 4'. La tige télescopique 41 cache une tige télescopique identique 42, située symétriquement par rapport au plan vertical V1 passant par l'axe central X'X. Chaque tige télescopique 41, 42, est positionnée à la verticale de la ferrure commune du couple de liaison correspondant 21, 22, à une distance supérieure à la longueur du couple. De plus, grâce au positionnement sur ferrure commune et en périphérie du radôme, chaque couple de liaison 21, 22, présente une longueur inférieure à celle de la tige télescopique correspondante 41, 42. Il en résulte un gain en longueur et donc en masse. Par ailleurs, les tiges télescopiques 41 et 42 possèdent une position de verrouillage automatique correspondant à l'ouverture maximale finale Oₘₐₓ du radôme 1 par rapport à la face F1 du fuselage. Dans l'exemple, l'ouverture maximale est d'environ 44°. L'opérateur exerce un effort (flèche E) jusqu'à l'obtention de l'ouverture maximale.

L'écart angulaire α entre le bras 20a et la bielle 2a de chaque couple de liaison 21 est d'environ 16° dans l'exemple en projection latérale. Un tel type d'écart permet d'empêcher la simple rotation du radôme autour de l'axe formé par l'extrémité avant des bielles 2a (voir la description en référence à la figure 6). De plus, les axes de rotation du bras 20a et de la bielle 2a ne sont pas parallèles afin d'imposer une cinématique aux éléments de liaison, bielles et bras (voir également la description en référence à la figure 6).

Les schémas 4a à 4k de la figure 4 illustrent l'évolution de l'ouverture progressive de radôme 1 en vues latérales, entre la position initiale (schéma 4a) où le rebord circulaire 1a du radôme 1 est disposé en interface contre la face F1 de la partie fixe 10 et la position finale (schéma 4k) correspondant à l'ouverture maximale Oₘₐₓ. L'opérateur soulève le radôme 1 en exerçant une poussée croissante à partir de la partie inférieure du radôme 1 (flèche E) et jusqu'à ce que les tiges télescopiques 41 et 42 se verrouillent. La cinématique d'ouverture est un déploiement vers le haut en mode utilisation (flèche E). Les bielles 2a et, respectivement, les bras 20a des couples de liaison 21 et 22 pivotent autour d'axes symétriques par rapport au plan vertical V1 (voir figure 2), respectivement AA', BB' et CC', DD'. Les tiges télescopiques 41 et 42 pivotent autour d'un axe FF' au niveau de la charnière 4.

Sur les schémas 4a à 4k, les mêmes signes de référence utilisés sur les figures précédentes désignent les mêmes éléments.

Les dimensions et positions des couples de liaison 21 et 22 sont réglées pour que :
- dans une première phase de translation du radôme (flèches T), illustrée par les schémas 4a à 4c, le rebord 1 a du radôme 1 reste sensiblement parallèle à la face F1 de la partie fixe 10, et
- dans une deuxième phase de rotation du radôme (flèches R), illustrée par les schémas 4d à 4k, le radôme pivote autour d'un axe parallèle à l'axe FF' en plus d'une translation vers l'avant et vers le haut (parallèlement à la flèche E).
   Cette décomposition en deux phases permet notamment d'éviter le cisaillement du joint d'étanchéité entre le radôme et la partie fixe. En effet, le détachement du radôme est uniquement axial par la translation pure en début de cinématique du mouvement. Ainsi, le joint conserve sa robustesse et sa fonction d'étanchéité sensiblement plus longtemps.

La vue frontale partielle de la bordure Bi du radome 1 selon la figure 5 permet d'illustrer un couple de liaison 21 avec ses ferrures de fixation sur le radôme et sur la partie fixe (qui n'est pas représentée pour des raisons de visibilité), respectivement référencés 31 et 33.

La ferrure 31 est solidarisée à la bordure Bi du radôme 1. Cette ferrure 31 comporte deux paliers à rotule, 3a et 30a, pour recevoir en rotation respectivement les extrémités adaptées de la bielle 2a du couple de liaison 21. Les autres extrémités de la tige 2a et de la bielle 20a sont accueillies en rotation sur la ferrure 33 apte à être solidarisé à la partie fixe 10 (voir figure 6).

Le bras 20a est coudé et comporte deux bords usinés 21a et 22a reliés par une paroi plane 23a, ces deux bras fusionnant en un seul à son extrémité montée sur la ferrure 31, et venant à son autre extrémité s'articuler sur l'axe de rotation de l'autre ferrure 33.

Sur la figure 5, une sphère de centrage 12 est également illustrée. Cet élément est également fixé en bordure Bi du radôme 1 et vient s'articuler sur un élément de centrage complémentaire solidaire de la partie fixe pour assurer un positionnement par centrages.

La ferrure 33 sur la face F1 de la partie fixe de fuselage 10 apparaît plus clairement sur la vue en perspective de la figure 6 qui reprend les mêmes signes de référence pour des éléments identiques. Sur cette figure, apparaissent les couplages de la bielle 2a et du bras 20a en vue frontale sur la ferrure de fixation 33 de la partie fixe 10 et en vue perspective entre le radôme 1 et la partie fixe 10 ainsi que sur la ferrure 31 du radôme 1. En particulier, les extrémités 20e et 2e (respectivement 20'e et 2'e), respectivement du bras 20a et de la bielle 2a, sont accueillies en rotation par des paliers à rotule 30a et 3a (respectivement 30'a et 3'a) formés sur la ferrure de fixation 31 du radôme 1 (respectivement la ferrure de fixation 33 de la partie fixe 10). Sur cette figure, Il apparaît également que la bielle 2a et le bras 20a sont orientés selon deux directions différentes. Ainsi, les axes de rotation de la bielle 2a et du bras 20a, confondus avec ceux des paliers 30a et 30'a pour le bras 20a, respectivement 3a et 3'a pour la bielle 2a, ne sont pas parallèles entre eux au niveau du dôme 1 et au niveau de la partie fixe 10. Dans d'autres variantes, ce non parallélisme des axes est réalisé sur le dôme et/ou sur la partie fixe. Les axes de rotation de la bielle 20a et du bras 2a de chaque couplage présentent alors un angle non nul dans deux plans différents. L'écart angulaire α entre le bras 20a et la bielle 2a apparaît ici en vue latérale, sensiblement en vraie grandeur. Cet écart est de préférence compris entre 15 et 20°, d'environ 16° dans l'exemple.

Les couplages en rotation sur ces paliers à rotule font avantageusement intervenir des supports de rotule en matériau élastique, par exemple en caoutchouc ou en élastomère synthétique. Les vues en coupe des figures 7 et 8 présentent de manière plus détaillée la configuration de tels couplages en rotation, en l'occurrence les couplages du bras 20a et de la bielle 2a sur les paliers 30a et 3a de la ferrure 31 illustré sur les figures 5 et 6.

En référence à la figure 7, l'extrémité 20e du bras 20a est montée en rotule sur le palier 30a par une broche à billes 30b. Des éléments 30r en matériau élastique servant de « soufflets » assurent l'élasticité dans tous les axes.

Sur la figure 8, l'extrémité 2e de la bielle 2a est montée en rotule sur une broche à bille 20x du palier 3a monté sur la ferrure 31 via des bagues 31 b. La rotule 2e est munie d'un matériau élastomère 20r.

Les rotules 2e et 20e munies de matériau élastomère 20r et 30r possèdent une raideur radiale déterminée pour que son déplacement maximal (correspondant à l'intervalle de tolérance maximal de l'assemblage) soit atteint pour la charge correspondant au verrouillage des verrous en périphérie du radôme.

l'invention n'est pas limitée aux exemples décrits ou représentés ci-dessus. Il est par exemple possible de prévoir plus de deux tiges télescopiques ou des formes variées des bielles ou des tiges de couplage, ainsi que d'autres types de liaison des éléments mobiles au radôme et à la partie fixe, ou d'autres géométries au droit des jonctions de ces éléments..

## Revendications

1. Procédé d'ouverture d'un dôme de protection (1) d'un dispositif à protéger monté dans une partie dite fixe (10), dans laquelle une interface de préférence plane (V2) sépare, en position initiale avant ouverture, le dôme (1) de la partie fixe (10), le procédé étant **caractérisé en ce que** le dôme (1) est relié à la partie fixe (10) par au moins deux couplages indépendants (21, 22) à double liaison mobiles en rotation entre le dôme (1) et la partie fixe (10), les liaisons (2a, 20a) d'un même couplage (21, 22) étant montées en commun sur le dôme (1) et sur la partie fixe (10) pour former globalement un pantographe en forme de trapèze isocèle (TI) qui, en cours d'ouverture, se déploie par pivotement (F) jusqu'à l'ouverture finale (Oₘₐₓ), de sorte que le dôme (1) s'éloigne de la partie fixe (10) selon une combinaison de mouvements de translation et de rotation.

2. Procédé d'ouverture selon la revendication 1, dans lequel les liaisons (2a, 20a) d'un même couplage (21, 22) ne sont pas parallèles entre elles au niveau du dôme (1) et/ou au niveau de la partie fixe (10).

3. Procédé d'ouverture selon la revendication précédente, dans lequel les liaisons (2a, 20a) de chaque couplage (21, 22) présentent un angle non nul dans deux plans différents.

4. Procédé d'ouverture selon la revendication 1, dans lequel les liaisons (2a, 20a) de chaque couplage (21, 22) sont montées sur le dôme (1) en articulation périphérique, en particulier en bordure interne (Bi).

5. Procédé d'ouverture selon l'une des revendications 1 ou 2, dans lequel la cinématique d'ouverture est un déploiement vers le haut en mode utilisation, la position finale du dôme (1) définissant, par rapport à sa position initiale, une ouverture (Oₘₐₓ) d'angle comprise entre 30 et 80°, de préférence entre 40 et 50°.

6. Procédé d'ouverture selon la revendication 1, dans lequel un verrouillage automatique est prévu lorsque le dôme (1) a atteint sa position d'ouverture finale (Oₘₐₓ).

7. Procédé d'ouverture selon la revendication précédente, dans lequel le verrouillage est réalisé en fin d'une extension télescopique (41, 42).

8. Procédé d'ouverture selon l'une quelconque des revendications précédentes, dans lequel les liaisons de couplage (21, 22) sont dimensionnées de sorte que la cinématique d'ouverture commence par une phase (T) de déplacement sensiblement en translation du dôme (1) perpendiculairement au plan de l'interface (V2), suivie d'une phase (R) de déplacement sensiblement en translation et rotation du dôme (1) autour d'un axe parallèle de pivotement du pantographe (TI).

9. Procédé d'ouverture selon l'une quelconque des revendications précédentes, dans lequel les couplages des liaisons (21, 22) sur le dôme (1) et sur la partie fixe (10) présentent une élasticité permettant de s'affranchir d'un ajustage.

10. Radôme apte à être reliée à une partie fixe (10) en particulier selon le procédé d'ouverture de l'une quelconque des revendications précédentes, **caractérisé en ce qu'**il comporte une enveloppe de protection en forme de dôme (1) et des mécanismes de liaison (21, 22) dont des premières extrémités (20e, 2e) sont aptes à être couplées en rotation sur l'enveloppe de protection (1) et des deuxièmes extrémités (20'e, 2'e) sont aptes à être couplées en rotation sur la partie fixe (10) sur laquelle est montée un système de communication (13) à protéger par le radôme (1), **en ce que** les mécanismes de liaison sont formés d'au moins deux couples (21, 22), **en ce que** les extrémités (2e, 2'e ; 20e, 20'e) de chaque couple de liaison (21, 22) sont montées sur une ferrure commune (31, 33) via des moyens de couplage en rotation (3a, 3'a ; 30a, 30'a), et **en ce que** chaque couple de liaison (21, 22) forme l'un des côtés (C1, C2) d'un pantographe en forme de trapèze isocèle (TI).

11. Radôme selon la revendication précédente, dans lequel les couples de liaison (2a, 20a) d'un même couplage (21, 22) présentent des axes de rotation non parallèles entre eux au niveau du dôme (1) et/ou au niveau de la partie fixe (10).

12. Radôme selon la revendication précédente, dans lequel les axes de rotation des couples de liaisons (2a, 20a) de chaque couplage (21, 22) présentent un angle non nul dans deux plans différents.

13. Radôme selon l'une des revendications 10 à 12, dans lequel chaque couple est constitué de deux éléments de liaison composés d'une bielle rectiligne de guidage (2a) et d'un bras de haute résistance mécanique (20a), chaque élément (2a, 20a) de chaque couple (21, 22) étant apte à pivoter globalement autour d'un axe fixe (AA', BB' ; CC', DD').

14. Radôme selon l'une des revendications 10 à 13, comportant au moins deux tiges télescopiques (41, 42) aptes à être fixées en rotation au radôme (1) et à la partie fixe (10) afin de réaliser un verrouillage automatique lorsque le radôme (1) a atteint sa position d'ouverture finale (Oₘₐₓ).

15. Radôme selon l'une quelconque des revendications 10 à 14, dans lequel chaque couple de liaison (21, 22) présente une longueur inférieure à celle de la tige télescopique correspondante (41, 42).

16. Radôme selon l'une quelconque des revendications 10 à 15, dans lequel les moyens de couplage en rotation des extrémités (2e, 20e) des couples de liaison (21, 22) sur le radôme (1) sont des paliers à rotule (3a, 30a) sur support en matériau élastique (20r, 30r).

17. Radôme selon l'une quelconque des revendications 10 à 16, dans lequel les côtés (C1, C2) du trapèze isocèle (TI) font un angle de 50 à 70°, de préférence 60°, avec les bases (B1, B2).

18. Radôme selon l'une quelconque des revendications 10 à 17, dans lequel la bielle (2a) et le bras (20a) d'un couple de liaison (21, 22) présentent, en projection latérale en mode utilisation, un écart angulaire (α) de 5 à 30°, de préférence de 10 à 25°.

19. Radôme selon l'une quelconque des revendications 10 à 18, dans lequel les bras de haute résistance mécanique (20a) sont coudés, formant deux bords usinés en nervures (21a, 22a).

## Patentansprüche

1. Verfahren zum Öffnen einer Schutzhaube (1) einer Vorrichtung zum Schützen, die in einem so genannten feststehenden Teil (10) angebracht ist, wobei eine vorzugsweise ebene Grenzfläche (V2) in der Ausgangsposition vor dem Öffnen die Haube (1) von dem feststehenden Teil (10) trennt, **dadurch gekennzeichnet, dass** die Haube (1) mit dem feststehenden Teil (10) durch mindestens zwei unabhängige bewegliche Kupplungen (21, 22) mit Doppelverbindung drehbar zwischen der Haube (1) und dem feststehenden Teil (10) verbunden ist, wobei die Verbindungen (2a, 20a) einer gleichen Kupplung (21, 22) gemeinsam auf der Haube (1) und an dem feststehenden Teil (10) angebracht sind, um insgesamt einen gleichschenkligen trapezförmigen Stromabnehmer (T1) zu bilden, der sich während des Öffnens durch Schwenken (F) bis zum endgültigen Öffnen (Oₘₐₓ) entfaltet, so dass sich die Haube (1) von dem feststehenden Teil (10) durch eine Kombination von Translations- und Rotationsbewegungen weg bewegt.

2. Verfahren zum Öffnen nach Anspruch 1, wobei die Verbindungen (2a, 20a) einer gleichen Kupplung (21, 22) nicht parallel zueinander in Bezug auf die Haube (1) und / oder in Bezug auf das feststehende Teil (10) sind.

3. Verfahren zum Öffnen nach dem vorhergehenden Anspruch, wobei die Verbindungen (2a, 20a) einer jeden Kupplung (21, 22) einen von Null verschiedenen Winkel in zwei Ebenen aufweisen.

4. Verfahren zum Öffnen nach Anspruch 1, wobei die Verbindungen (2a, 20a) einer jeden Kupplung (21, 22) an der Haube (1) gelenkig am Rand, insbesondere am inneren Rand (Bi) angeordnet ist.

5. Verfahren zum Öffnen nach einem der Ansprüche 1 oder 2, wobei die Kinematik des Öffnens ein aufwärtsgerichtetes Entfalten bei der Verwendung ist, wobei die Endposition der Haube (1) in Bezug auf seine Ausgangsstellung, einen Öffnungswinkel (Omax) zwischen 30 und 80°, vorzugsweise zwischen 40 und 50°, definiert.

6. Verfahren zum Öffnen nach Anspruch 1, wobei eine automatische Verriegelung vorgesehen ist, sobald die Haube (1) ihre endgültige Öffnungsposition (Oₘₐₓ) erreicht hat.

7. Verfahren zum Öffnen nach einem der vorhergehenden Ansprüche, wobei die Verriegelung am Ende einer Teleskopverlängerung (41,42) ausgebildet ist.

8. Verfahren zum Öffnen nach einem der vorhergehenden Ansprüche, wobei die Kupplungsverbindungen (21,22) so dimensioniert sind, dass die Kinematik des Öffnens mit einer Phase (T) der Verschiebung im Wesentlichen durch Translation der Haube (1) senkrecht zur Schnittebene (V2) beginnt, gefolgt von einer Phase (R) der Verschiebung im Wesentlichen durch Translation und Drehung der Haube (1) um eine parallele Schwenkachse des Stromabnehmers (TI).

9. Verfahren zum Öffnen nach einem der vorhergehenden Ansprüche, wobei die Kupplungsverbindungen (21, 22) auf der Haube (1) und auf dem festen Teil (10) eine Elastizität aufweisen, um eine Anpassung nicht zu benötigen.

10. Radom, das eingerichtet ist, mit einem feststehenden Teil (10), insbesondere nach dem Verfahren zum Öffnen nach einem der vorhergehenden Ansprüche, verbunden zu werden, **dadurch gekennzeichnet, dass** es eine Schutzhülle in Form der Haube (1) und Verbindungseinrichtungen (21, 22) aufweist, deren erste Enden (20e, 2e) eingerichtet sind, drehbar mit der Schutzhülle (1) gekoppelt zu sein, und deren zweite Ende (20'e, 2'e) eingerichtet sind, drehbar an dem feststehenden Teil (10) gekoppelt zu sein, auf dem ein Kommunikationssystem (13) angebracht ist, welches durch das Random (1) geschützt ist, dass die Verbindungseinrichtungen durch mindestens zwei Paare (21, 22) gebildet sind, dass die Enden (2e, 2'e; 20e, 20'e) eines jeden Verbindungspaars (21, 22) auf einer gemeinsamen Halterung (31, 33) durch Drehkupplungseinrichtungen (3a , 3'a; 30a, 30'a) angebracht sind, und dass jedes Verbindungspaar (21, 22) eine Seite (C1, C2) eines Stromabnehmers in der Form eines gleichschenkligen Trapezes (T1) bildet.

11. Radom nach dem vorhergehenden Anspruch, wobei die Verbindungspaare (2a, 20a) derselben Kupplung (21, 22) zueinander nicht parallele Drehachsen mit Bezug auf die Haube (1) und / oder mit Bezug auf das feststehende Teil (10) aufweisen.

12. Radom nach dem vorhergehenden Anspruch, wobei die Drehachsen der Verbindungspaare (2a, 20a) einer jeden Kupplung (21, 22) einen von Null verschiedenen Winkel in zwei verschiedenen Ebenen aufweisen.

13. Radom nach einem der Ansprüche 10 bis 12, wobei jedes Paar aus zwei Verbindungselementen aus einer geraden Führungsstange (2a) und einem Arm (20a) mit hoher mechanische Beständigkeit besteht, wobei jedes Elements (2a, 20a) eines jeden Paares (21, 22) eingerichtet ist, sich insgesamt um eine feststehende Achse (AA ', BB', CC', DD') zu drehen.

14. Radom nach einem der Ansprüche 10 bis 13 mit mindestens zwei Teleskopstangen (41, 42), die eingerichtet sind, um mit dem Random (1) und dem feststehenden Teil (10) drehbar befestigt zu sein, um eine automatische Verriegelung umzusetzen, sobald das Random (1) seine endgültige Öffnungsstellung (Oₘₐₓ) erreicht hat.

15. Radom nach einem der Ansprüche 10 bis 14, wobei jedes Verbindungspaar (21, 22) eine geringere Länge als die entsprechende Teleskopstange (41, 42) aufweist.

16. Radom nach einem der Ansprüche 10 bis 15, wobei die Drehkopplungseinrichtungen der Enden (2e, 20e) der Verbindungspaare (21, 22) auf dem Random (1) Gelenklager (3a, 30a) auf einem Träger aus elastischem Material (20r, 30r) sind.

17. Radom nach einem der Ansprüche 10 bis 16, wobei die Rippen (C1, C2) des gleichschenkligen Trapezes (TI) einen Winkel von 50 bis 70°, vorzugsweise 60°, mit den Basen (B 1, B2) bilden.

18. Radom nach einem der Ansprüche 10 bis 17, wobei die Verbindungsstange (2a) und der Arm (20a) eines Verbindungspaares (21, 22) in Seitenansicht im Betriebszustand eine Winkelabweichung (a) von 5 bis 30 °, vorzugsweise 10 bis 25°, bilden.

19. Radom nach einem der Ansprüche 10 bis 18, wobei die Arme (20a) mit hoher mechanischer Festigkeit gebogen sind, wobei sie zwei Kanten bilden, die aus Rippen (21a, 22a) hergestellt sind.

## Claims

1. Method for opening a dome (1) for the protection of a device to be protected, fitted in a part described as fixed (10), in which, in the initial position before opening, a preferably plane interface (V2) separates the dome (1) from the fixed part (10), the method being **characterised in that** the dome (1) is connected to the fixed part (10) by at least two independent double-link connections (21, 22) that are movable in rotation between the dome (1) and the fixed part (10), the links (2a, 20a) in a single connection (21, 22) being fitted in common to the dome (1) and to the fixed part (10) to form overall a pantograph in the shape of an isosceles trapezium (TI) which, during opening, opens out by pivoting (F) until maximum opening (Oₘₐₓ) is achieved, so that the dome (1) moves away from the fixed part (10) via a combination of movements in translation and in rotation.

2. Method for opening according to claim 1, in which the links (2a, 20a) in a single connection (21, 22) are not parallel to one another at the dome (1) and/or at the fixed part (10).

3. Method for opening according to the preceding claim, in which the links (2a, 20a) of each connection (21, 22) have a non-zero angle in two different planes.

4. Method for opening according to claim 1, in which the links (2a, 20a) of each connection (21, 22) are mounted in articulation on the periphery of the dome (1), in particular on the inner rim (Bi).

5. Method for opening according to either claim 1 or claim 2, in which the opening kinematics is an opening out upwards in use mode, the final position of the dome (1) defining, relative to its initial position, an angle of opening (Oₘₐₓ) of between 30° and 80°, preferably between 40° and 50°.

6. Method for opening according to claim 1, in which automatic locking is provided when the dome (1) has reached its final open position (Oₘₐₓ).

7. Method for opening according to the preceding claim, in which the locking is produced at the end of a telescopic extension (41, 42).

8. Method for opening according to any one of the preceding claims, in which the connection links (21, 22) are dimensioned so that the opening kinematics starts with a phase of movement (T) of the dome (1) substantially in translation perpendicular to the plane of the interface (V2), followed by a phase (R) of movement of the dome (1) substantially in translation and rotation around a parallel axis of pivot of the pantograph (TI).

9. Method for opening according to any one of the preceding claims, in which the connections of the links (21, 22) to the dome (1) and to the fixed part (10) have a resilience that enables adjustment to be avoided.

10. Radome capable of being connected to a fixed part (10), in particular according to the method for opening according to any one of the preceding claims, **characterised in that** it has a dome-shaped protective cover (1) and linking mechanisms (21, 22) of which first extremities (20e, 2e) can be connected in rotation to the protective cover (1) and second extremities (20'e, 2'e) can be connected in rotation to the fixed part (10) onto which a communication system (13) to be protected by the radome (1) is mounted, **in that** the linking mechanisms are made up of at least two pairs (21, 22), **in that** the extremities (2e 2'e; 20e, 20'e) of each connecting pair (21, 22) are mounted on a common fitting (31, 33) via means for connecting in rotation (3a, 3'a; 30a, 30'a), and **in that** each connecting pair (21, 22) forms one of the sides (C1, C2) of a pantograph shaped as an isosceles trapezium (TI).

11. Radome according to the preceding claim, in which the connecting pairs (2a, 20a) of a single connection (21, 22) have axes of rotation that are not parallel to one another at the dome (1) and/or at the fixed part (10).

12. Radome according to the preceding claim, in which the axes of rotation of the connecting pairs (2a, 20a) of each connection (21, 22) have a non-zero angle in two different planes.

13. Radome according to any one of claims 10 to 12, in which each pair consists of two linking elements made up of a rectilinear guide linkage (2a) and an arm of high mechanical strength (20a), each element (2a, 20a) of each pair (21, 22) being capable of pivoting overall around a fixed axis (AA', BB'; CC', DD').

14. Radome according to any one of claims 10 to 13, comprising at least two telescopic rods (41, 42) capable of being fixed in rotation to the radome (1) and to the fixed part (10) in order to produce automatic locking when the radome (1) has reached its final open position (Oₘₐₓ).

15. Radome according to any one of claims 10 to 14, in which each connecting pair (21, 22) is shorter than the corresponding telescopic rod (41, 42).

16. Radome according to any one of claims 10 to 15, in which the means for connection in rotation of the extremities (2e, 20e) of the connecting pairs (21, 22) to the radome (1) are swivel bearings (3a, 30a) on a support made of resilient material (20r, 30r).

17. Radome according to any one of claims 10 to 16, in which the sides (C1, C2) of the isosceles trapezium (TI) form an angle of 50° to 70°, preferably 60°, with the bases (B1, B2).

18. Radome according to any one of claims 10 to 17, in which the linkage (2a) and the arm (20a) of a connecting pair (21, 22) have, in lateral projection when in use, an angle of separation (α) of from 5° to 30°, preferably from 10° to 25°.

19. Radome according to any one of claims 10 to 18, in which the arms with high mechanical strength (20a) are curved, forming two edges machined as ribs (21 a, 22a).
